# EUROPÄISCHE PATENTSCHRIFT

(11) **EP 2 653 305 B1**
(45) Veröffentlichungstag und Bekanntmachung des Hinweises auf die Patenterteilung: **16.03.2016**
(21) Anmeldenummer: 12400057.1
(22) Anmeldetag: 20.12.2012
(51) Int. Cl.: B32B 7/08, B42D 25/00, B42D 25/355, B42D 15/00

(54) **Verfahren zur Herstellung eines Kartenkörpers für einen tragbaren Datenträger**
Method for producing a card body for a portable data carrier
Procédé destiné à la fabrication d'un corps de carte pour un port de données portatif

(30) Priorität: 16.04.2012 DE 102012007599
(43) Veröffentlichungstag der Anmeldung: 23.10.2013
(73) Patentinhaber: Giesecke & Devrient GmbH, 81677 München (DE)
(72) Erfinder: Kohl, Klaus, 83714 Miesbach (DE)

(56) Entgegenhaltungen:
- EP-A2- 0 689 164
- DE-A1- 10 047 972

## Beschreibung

Die Erfindung betrifft ein Verfahren zur Herstellung eines Kartenkörpers für einen tragbaren Datenträger sowie einen entsprechenden Kartenkörper bzw. tragbaren Datenträger.

Aus dem Stand der Technik ist es bekannt, in Kartenkörpern von tragbaren Datenträgern Sicherheitselemente in der Form von Sicherheitsstreifen bzw. Sicherheitsfäden einzubringen. Im Rahmen des Herstellungsprozesses des Kartenkörpers wird der Sicherheitsfaden in der Regel auf eine innere Kernfolie des Kartenkörpers aufgeprägt, was jedoch den Nachteil hat, dass der Verbund aus mehreren Folien, durch welche der Kartenkörper gebildet wird, geschwächt wird.

In der Druckschrift WO 2008/031584 A1 ist ein tragbarer Datenträger mit Transponder und Antennenspule beschrieben. In den Kartenkörper des Datenträgers ist ein Sicherheitsfaden eingebracht, der auch als Leiterbrücke zur Überbrückung eines Unterbrechungsabschnitts der Antennenspule fungiert.

In der Druckschrift DE 100 47 972 A1 ist ein Verfahren zur Herstellung einer Transponderspule beschrieben, bei dem die Transponderspule mittels eines elektrisch leitfähigen Fadens auf einen Datenträger bzw. auf eine Trägerschicht des Datenträgers aufgenäht wird. Der Nähfaden kann dabei gleichzeitig auch als Sicherheitsfaden dienen.

Aufgabe der Erfindung ist es, auf einfache Weise einen Sicherheitsfaden in einen Kartenkörper für einen tragbaren Datenträger einzubringen, ohne dabei die Struktur des Kartenkörpers zu schwächen.

Diese Aufgabe wird durch das Verfahren gemäß Patentanspruch 1 bzw. den Kartenkörper gemäß Patentanspruch 8 gelöst. Weiterbildungen der Erfindung sind in den abhängigen Ansprüchen definiert.

Im Rahmen der erfindungsgemäßen Herstellung des Kartenkörpers für einen kartenförmigen tragbaren Datenträger wird eine Mehrzahl von Folien miteinander verbunden, wobei zumindest ein Sicherheitsfaden in den Kartenkörper eingebracht wird. Die Folien sind dabei vorzugsweise Kunststofffolien, welche insbesondere im Rahmen eines Laminationsprozesses miteinander verklebt werden. Das Verfahren der Erfindung zeichnet sich dadurch aus, dass das Einbringen des zumindest einen Sicherheitsfadens derart erfolgt, dass mit dem zumindest einen Sicherheitsfaden mehrere Folien aus der Mehrzahl von Folien miteinander vernäht werden. Der Begriff des Sicherheitsfadens ist dabei weit zu verstehen und nicht auf Fäden mit rundem Querschnitt beschränkt. Insbesondere kann ein Sicherheitsfaden auch in der Form eines Sicherheitsstreifens bzw. Sicherheitsbands ausgebildet sein. Das erfindungsgemäße Verfahren weist den Vorteil auf, dass durch das Vernähen von mehreren Folien der Kartenaufbau im Vergleich zu aufgeprägten Sicherheitsfäden verstärkt wird.

In einer besonders bevorzugten Ausführungsform umfasst die Mehrzahl von Folien eine Mehrzahl von Kernfolien (auch als Inlettfolien bezeichnet) und auf die Kernfolien aufgebrachte Deckfolien (auch als Overlayfolien bezeichnet). Dabei werden mit dem zumindest einen Sicherheitsfaden (ausschließlich) mehrere der Kernfolien miteinander vernäht. Dies hat zur Folge, dass der Sicherheitsfaden in das Innere des Kartenkörpers eingebracht ist und durch die Deckfolien gegenüber Manipulationen geschützt ist.

In einer weiteren bevorzugten Ausführungsform des erfindungsgemäßen Verfahrens werden die Kernfolien vor dem Vernähen mit dem zumindest einen Sicherheitsfaden miteinander verbunden und vorzugsweise laminiert. Die Laminierung ist dabei insbesondere eine Vorlaminierung, wobei die endgültige Laminierung der Folien beim Aufbringen der Deckfolien erfolgt. Gemäß dieser Variante sind die Kernfolien während des Vernähens mit dem Sicherheitsfaden zueinander fixiert, wodurch eine präzise Vernähung der Kernfolien mit dem Sicherheitsfaden gewährleistet wird.

In einer weiteren Ausgestaltung des erfindungsgemäßen Verfahrens werden die mehreren Folien mit einem oder mehreren einzelnen Sicherheitsfäden an unterschiedlichen Positionen im Kartenkörper miteinander vernäht. Das heißt, im Falle von mehreren einzelnen Sicherheitsfäden sind diese an verschiedenen Stellen im Kartenkörper durch Vernähen eingebracht, ohne dass sich die Sicherheitsfäden berühren.

Alternativ oder zusätzlich besteht auch die Möglichkeit, dass das Vernähen der Folien mit dem zumindest einen Sicherheitsfaden derart erfolgt, dass mehrere Sicherheitsfäden miteinander verwebt werden. Das heißt, das Vernähen erfolgt mit einer Technik, bei der mehrere Sicherheitsfäden beteiligt sind.

Zum Vernähen der Folien mit dem zumindest einen Sicherheitsfaden können an sich bekannte Nähtechniken eingesetzt werden, wie z.B. Einfachkettenstich und/ oder Doppelsteppstich und/ oder Overlockstich. Bei den beiden zuletzt genannten Nähtechniken werden mehrere Fäden eingebracht.

In einer weiteren bevorzugten Ausführungsform wird der zumindest eine Sicherheitsfaden derart in den Kartenkörper eingebracht, dass er von beiden Seiten des Kartenkörpers sichtbar ist. Dies kann durch eine entsprechende Nähtechnik und transparente Deckschichten (sofern vorhanden) gewährleistet werden.

Neben dem oben beschriebenen Herstellungsverfahren betrifft die Erfindung ferner einen Kartenkörper für einen tragbaren Datenträger, der eine Mehrzahl von Folien umfasst, wobei zumindest ein Sicherheitsfaden in den Kartenkörper eingebracht ist. Dabei sind mit dem zumindest einen Sicherheitsfaden mehrere Folien aus der Mehrzahl von Folien miteinander vernäht. Der Kartenkörper ist vorzugsweise mit dem erfindungsgemäßen Verfahren bzw. einer oder mehrerer bevorzugter Varianten des erfindungsgemäßen Verfahrens hergestellt.

In einer bevorzugten Ausführungsform des erfindungsgemäßen Kartenkörpers umfasst die Mehrzahl von Folien des Kartenkörpers eine Mehrzahl von Kernfolien und auf den Kernfolien aufgebrachte Deckfolien, wobei mit dem zumindest einen Sicherheitsfaden mehrere der Kernfolien miteinander vernäht sind.

In einer weiteren bevorzugten Variante sind die mehreren Folien mit einem oder mehreren einzelnen Sicherheitsfäden an unterschiedlichen Positionen im Kartenkörper miteinander vernäht. Alternativ oder zusätzlich besteht auch die Möglichkeit, dass die mehreren Folien durch die Verwebung mehrerer Sicherheitsfäden vernäht sind.

Der zumindest eine Sicherheitsfaden ist vorzugsweise mit den bereits oben beschriebenen Techniken, d.h. Einfachkettenstich und/ oder Doppelsteppstich und/oder Overlockstich, in die Folien eingenäht.

In einer weiteren Variante ist der zumindest eine Sicherheitsfaden derart in den Kartenkörper eingebracht, dass er von beiden Seiten des Kartenkörpers sichtbar ist.

Neben dem soeben beschriebenen Kartenkörper betrifft die Erfindung ferner einen tragbaren Datenträger, insbesondere eine Chipkarte, der den erfindungsgemäßen Kartenkörper bzw. eine oder mehrere bevorzugte Varianten des erfindungsgemäßen Kartenkörpers umfasst.

Ausführungsbeispiele der Erfindung werden nachfolgend anhand der beigefügten Figuren detailliert beschrieben.

Es zeigen:
- Fig.1: eine Schnittansicht eines Kartenkörpers, der mit einer Ausführungsform des erfindungsgemäßen Verfahrens hergestellt ist; und
- Fig. 2: eine Draufsicht auf den Kartenkörper der Fig. 1.

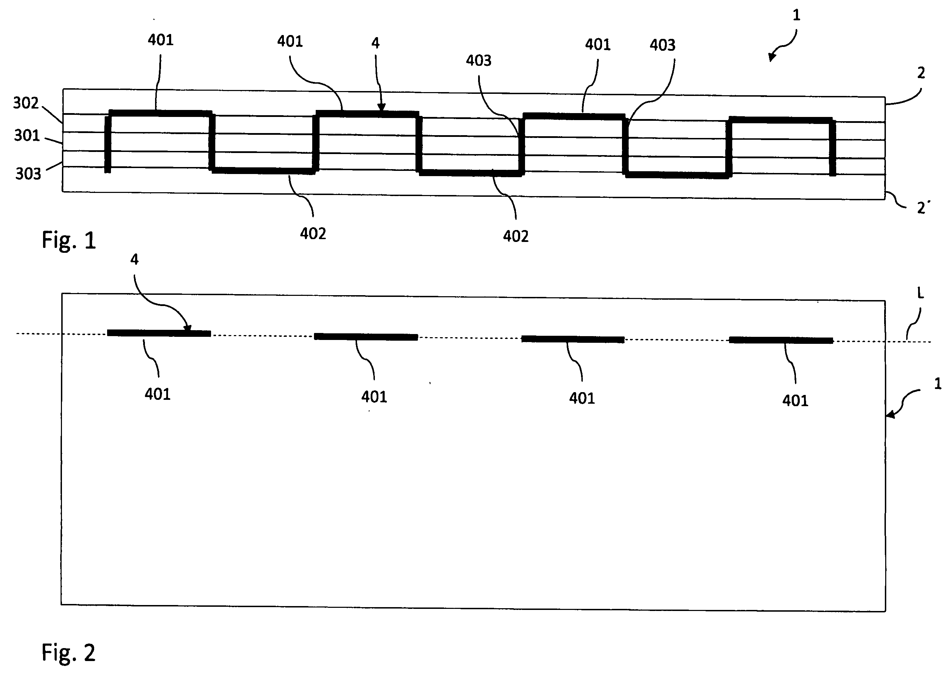

Fig.1 zeigt in Schnittansicht einen Kartenkörper 1 in der Form einer Mehrlagenkarte, die mit einer Variante des erfindungsgemäßen Verfahrens hergestellt ist. Der Kartenkörper umfasst drei Kern- bzw. Inlettfolien 301, 302 und 303. Dabei sind auf der Oberseite bzw. Unterseite der mittleren Inlettfolie 301 die Kernfolien 302 bzw. 303 aufgebracht. Auf der Oberseite der Inlettfolie 302 befindet sich ferner eine Deck- bzw. Overlayfolie 3 und auf der Unterseite der Inlettfolie 303 ist die Deck- bzw. Overlayfolie 2' aufgebracht. Der Kartenkörper wird im Rahmen eines Laminationsprozesses hergestellt, bei dem die einzelnen Folien über Heißverklebung unter hohem Druck miteinander verbunden werden. In einem Zwischenschritt während der Herstellung wird der mit dem Bezugszeichen 4 bezeichnete Sicherheitsfaden eingebracht, der ein fälschungssicheres Sicherheitselement darstellt, das untrennbar mit den Inlettfolien im Rahmen eines Nähprozesses verbunden wird.

Sicherheitsfäden sind an sich aus dem Stand der Technik bekannt und können je nach Ausgestaltung aus verschiedenen Materialien, wie z.B. elektrisch leitfähigen Polymeren bestehen. Herkömmlicherweise werden solche Sicherheitsfäden mittels Heißprägerädern auf die Inlettfolien aufgeprägt. Erfindungsgemäß erfolgt nunmehr eine Verbindung von mehreren Inlettfolien, indem der Sicherheitsfaden 4 mit diesen Folien vernäht wird. Diese Vernähung ist aus Fig.1 ersichtlich. Insbesondere erkennt man, dass der Sicherheitsfaden 4 horizontale Abschnitte 401 aufweist, die sich entlang der Oberseite der Inlettfolie 302 erstrecken, sowie horizontale Abschnitte 402, welche sich entlang der Unterseite der Inlettfolie 303 erstrecken. Diese horizontalen Abschnitte sind über vertikale Abschnitte 403 miteinander verbunden. Aus Übersichtlichkeitsgründen sind nur einige der Abschnitte mit den entsprechenden Bezugszeichen 401, 402 und 403 versehen.

Wie erwähnt, wird der Faden 4 im Rahmen eines Nähprozesses eingebracht, d.h. der Faden wird mittels einer Nähmaschine in die Inlettfolien 301 bis 303 eingenäht. In der Ausführungsform der Fig.1 wird durch den Nähprozess ein einzelner Sicherheitsfaden eingebracht. Gegebenenfalls kann der Nähprozess auch derart ausgestaltet sein, dass hierüber mehrere Sicherheitsfäden miteinander verwebt werden. Zur Vernähung können an sich bekannte Nähtechniken eingesetzt werden, wie z.B. Einfachkettenstich oder der bei Haushaltsnähmaschinen übliche Doppelsteppstich bzw. Overlockstich.

Fig. 2 zeigt eine Draufsicht von oben auf den Kartenkörper der Fig.1. Die Erstreckungsrichtung des Fadens ist dabei durch die gestrichelte Linie L angedeutet. Man erkennt, dass von der Oberseite des Kartenkörpers die entsprechenden horizontalen Abschnitte 401 des Sicherheitsfadens 4 sichtbar sind, was durch die Verwendung einer transparenten Overlayfolie 2 erreicht wird. In gleicher Weise sind von der Unterseite die entsprechenden horizontalen Abschnitte 402 des Sicherheitsfadens sichtbar, was wiederum durch eine transparente Overlayfolie 2' gewährleistet wird.

Im Rahmen der Herstellung des Kartenkörpers der Fig. 1 bzw. Fig. 2 werden zunächst die Inlettfolien 301 bis 303 übereinander angeordnet und dann im Rahmen einer Vorlaminierung miteinander verbunden, wobei der Schritt der Vorlaminierung gegebenenfalls auch weggelassen werden kann. Anschließend erfolgt das Vernähen der Inlettfolien 301 bis 303 mit dem Sicherheitsfaden 4. Schließlich werden die Overlayfolien 2 und 2' im Rahmen einer Laminierung aufgebracht, so dass insgesamt die laminierte Kartenkörperstruktur 1 gebildet wird. Der Kartenkörper ist dabei für eine Chipkarte vorgesehen, so dass im Rahmen seiner Herstellung bzw. in nachfolgenden Schritten entsprechende elektronische Bauteile, insbesondere ein Chipmodul und ggf. eine Transponderantenne, in den Kartenkörper eingebracht werden.

Die im Vorangegangenen beschriebene Ausführungsform der Erfindung weist eine Reihe von Vorteilen auf. Insbesondere wird im Gegensatz zu aufgeprägten Sicherheitsfäden der Kartenaufbau durch das Vernähen mehrerer Kernfolien verstärkt und gegen Manipulation geschützt. Darüber hinaus ist der Sicherheitsfaden auf beiden Seiten des Kartenkörpers sichtbar. Der Sicherheitsfaden kann dabei durch an sich bekannte Nähtechniken in einfacher Weise in den Kartenkörper eingebracht werden.

## Patentansprüche

1. Verfahren zur Herstellung eines Kartenkörpers (1) für einen tragbaren Datenträger, bei dem eine Mehrzahl von Folien (2, 2', 301, 302, 303) miteinander verbunden werden, wobei zumindest ein Sicherheitsfaden (4) in den Kartenkörper (1) eingebracht wird,
**dadurch gekennzeichnet, dass**
das Einbringen des zumindest einen Sicherheitsfadens (4) derart erfolgt, dass mit dem zumindest einen Sicherheitsfaden (4) mehrere Folien (301, 302, 303) aus der Mehrzahl von Folien (2, 2', 301, 302, 303) miteinander vernäht werden.

2. Verfahren nach Anspruch 1, **dadurch gekennzeichnet, dass** die Mehrzahl von Folien (2, 2', 301, 302, 303) eine Mehrzahl von Kernfolien (301, 302, 303) und auf die Kernfolien (301, 302, 303) aufgebrachte Deckfolien (2, 2') umfasst, wobei mit dem zumindest einen Sicherheitsfaden (4) mehrere der Kernfolien (301, 302, 303) miteinander vernäht werden.

3. Verfahren nach Anspruch 1 oder 2, **dadurch gekennzeichnet, dass** die Kernfolien (301, 302, 303) vor dem Vernähen mit dem zumindest einen Sicherheitsfaden (4) miteinander verbunden und insbesondere laminiert werden.

4. Verfahren nach einem der vorhergehenden Ansprüche, **dadurch gekennzeichnet, dass** die mehreren Folien (301, 302, 303) mit einem oder mehreren einzelnen Sicherheitsfäden (4) an unterschiedlichen Positionen im Kartenkörper (1) miteinander vernäht werden.

5. Verfahren nach eine der vorhergehenden Ansprüche, **dadurch gekennzeichnet, dass** das Vernähen der Folien (301, 302, 303) mit dem zumindest einen Sicherheitsfaden (4) derart erfolgt, dass mehrere Sicherheitsfäden (4) miteinander verwebt werden.

6. Verfahren nach einem der vorhergehenden Ansprüche, **dadurch gekennzeichnet, dass** das Vernähen der Folien (301, 302, 303) mit dem zumindest einen Sicherheitsfaden (4) basierend auf einem Einfachkettenstich und/oder einem Doppelsteppstich und/oder einem Overlockstich erfolgt.

7. Verfahren nach einem der vorhergehenden Ansprüche, **dadurch gekennzeichnet, dass** der zumindest eine Sicherheitsfaden (4) derart in den Kartenkörper (1) eingebracht wird, dass er von beiden Seiten des Kartenkörpers (1) sichtbar ist.

8. Kartenkörper für einen tragbaren Datenträger, umfassend eine Mehrzahl von Folien (2, 2', 301, 302, 303), wobei zumindest ein Sicherheitsfaden (4) in den Kartenkörper (1) eingebracht ist,
**dadurch gekennzeichnet, dass**
mit dem zumindest einen Sicherheitsfaden (4) mehrere Folien (301, 302, 303) aus der Mehrzahl von Folien (2, 2', 301, 302, 303) miteinander vernäht sind,

9. Kartenkörper nach Anspruch 8, **dadurch gekennzeichnet, dass** die Mehrzahl von Folien (2, 2', 301, 302, 303) eine Mehrzahl von Kernfolien (301, 302, 303) und auf die Kernfolien (301, 302, 303) aufgebrachte Deckfolien (2, 2') umfasst, wobei mit dem zumindest einen Sicherheitsfaden (4) mehrere der Kernfolien (301, 302, 303) miteinander vernäht sind.

10. Kartenkörper nach Anspruch 8 oder 9, **dadurch gekennzeichnet, dass** die mehreren Folien (301, 302, 303) mit einem oder mehreren einzelnen Sicherheitsfäden (4) an unterschiedlichen Positionen im Kartenkörper miteinander vernäht sind.

11. Kartenkörper nach einem der Ansprüche 8 bis 10, **dadurch gekennzeichnet, dass** die mehreren Folien (301, 302, 303) durch die Verwebung mehrerer Sicherheitsfäden (4) vernäht sind.

12. Kartenkörper nach einem der Ansprüche 8 bis 11, **dadurch gekennzeichnet, dass** die mehreren Folien (301, 302, 303) mit dem zumindest einen Sicherheitsfaden (4) basierend auf einem Einfachkettenstich und/ oder einem Doppelsteppstich und/ oder einem Overlockstich vernäht sind.

13. Kartenkörper nach einem der vorhergehenden Ansprüche, **dadurch gekennzeichnet, dass** der zumindest eine Sicherheitsfaden (4) derart in dem Kartenkörper eingebracht ist, dass er von beiden Seiten des Kartenkörpers (1) sichtbar ist.

14. Tragbarer Datenträger, insbesondere Chipkarte, umfassend eine Kartenkörper (1) nach einem der Ansprüche 8 bis 13.

## Claims

1. A method for manufacturing a card body (1) for a portable data carrier, wherein a plurality of foils (2, 2', 301, 302, 303) are bonded with each other, wherein at least one security thread (4) is incorporated in the card body (1),
**characterized in that**
the incorporation of the at least one security thread (4) is effected such that with the at least one security thread (4) several foils (301, 302, 303) from the plurality of foils (2, 2', 301, 302, 303) are mutually sewed up.

2. The method according to claim 1, **characterized in that** the plurality of foils (2, 2', 301, 302, 303) comprises a plurality of core foils (301, 302, 303) and cover foils (2, 2') applied to the core foils (301, 302, 303), wherein with the at least one security thread (4) several of the core foils (301, 302, 303) are mutually sewed up.

3. The method according to claim 1 or 2, **characterized in that** the core foils (301, 302, 303) are mutually bonded and in particular laminated before sewing up with the at least one security thread (4).

4. The method according to any of the preceding claims, **characterized in that** the several foils (301, 302, 303) are mutually sewed up with one or several individual security threads (4) in different positions in the card body (1).

5. The method according to any of the preceding claims, **characterized in that** the sewing up of the foils (301, 302, 303) with the at least one security thread (4) is effected such that several security threads (4) are mutually interwoven.

6. The method according to any of the preceding claims, **characterized in that** the sewing up of the foils (301, 302, 303) with the at least one security thread (4) is effected on the basis of a single-thread chain stitch and/or a double locked stitch and/or an overlock stitch.

7. The method according to any of the preceding claims, **characterized in that** the at least one security thread (4) is incorporated in the card body (1) such that it is visible from both sides of the card body (1).

8. A card body for a portable data carrier, comprising a plurality of foils (2, 2', 301, 302, 303), wherein at least one security thread (4) is incorporated in the card body (1),
**characterized in that**
with the at least one security thread (4) several foils (301, 302, 303) from the plurality of foils (2, 2', 301, 302, 303) are mutually sewed up.

9. The card body according to claim 8, **characterized in that** the plurality of foils (2, 2', 301, 302, 303) comprises a plurality of core foils (301, 302, 303) and cover foils (2, 2') applied to the core foils (301, 302, 303), wherein with the at least one security thread (4) several of the core foils (301, 302, 303) are mutually sewed up.

10. The card body according to claim 8 or 9, **characterized in that** the several foils (301, 302, 303) are mutually sewed up with one or several individual security threads (4) in different positions in the card body.

11. The card body according to any of the claims 8 to 10, **characterized in that** the several foils (310, 320, 303) are sewed up by interweaving several security threads (4).

12. The card body according to any of the claims 8 to 11, **characterized in that** the several foils (301, 302, 303) are sewed up with the at least one security thread (4) on the basis of a single-thread chain stitch and/or a double locked stitch and/or an overlock stitch.

13. The card body according to any of the preceding claims, **characterized in that** the at least one security thread (4) is incorporated in the card body such that it is visible from both sides of the card body (1).

14. A portable data carrier, in particular a chip card, comprising a card body (1) according to any of the claims 8 to 13.

## Revendications

1. Procédé de fabrication d'un corps de carte (1) destiné à un support de données portable, dans lequel une pluralité de feuilles (2, 2', 301, 302, 303) sont jointes les unes aux autres, au moins un fil de sécurité (4) étant incorporé dans le corps de carte (1),
**caractérisé en ce que**
l'incorporation du au moins un fil de sécurité (4) a lieu de telle façon que, avec le au moins un fil de sécurité (4), plusieurs feuilles (301, 302, 303) parmi la pluralité de feuilles (2, 2', 301, 302, 303) sont cousues ensemble.

2. Procédé selon la revendication 1, **caractérisé en ce que** la pluralité de feuilles (2, 2', 301, 302, 303) comprend une pluralité de feuilles noyaux (301, 302, 303) et des feuilles de recouvrement (2, 2') appliquées sur les feuilles noyaux (301, 302, 303); cependant que, avec le au moins un fil de sécurité (4), plusieurs des feuilles noyaux (301, 302, 303) sont cousues ensemble.

3. Procédé selon la revendication 1 ou 2, **caractérisé en ce que** les feuilles noyaux (301, 302, 303) sont, avant la couture avec le au moins un fil de sécurité (4), jointes ensemble et en particulier laminées.

4. Procédé selon une des revendications précédentes, **caractérisé en ce que** les plusieurs feuilles (301, 302, 303) sont cousues ensemble avec un ou plusieurs fils de sécurité (4) distincts à différentes positions dans le corps de carte (1).

5. Procédé selon une des revendications précédentes, **caractérisé en ce que** la couture des feuilles (301, 302, 303) avec le au moins un fil de sécurité (4) a lieu de telle façon que plusieurs fils de sécurité (4) sont tissés ensemble.

6. Procédé selon une des revendications précédentes, **caractérisé en ce que** la couture des feuilles (301, 302, 303) avec le au moins un fil de sécurité (4) a lieu de manière basée sur un point de chaînette simple et/ou sur un point noué double et/ou sur un point overlock.

7. Procédé selon une des revendications précédentes, **caractérisé en ce que** le au moins un fil de sécurité (4) est incorporé de telle façon dans le corps de carte (1) qu'il est visible des deux côtés du corps de carte (1).

8. Corps de carte destiné à un support de données portable, comportant une pluralité de feuilles (2, 2', 301, 302, 303), au moins un fil de sécurité (4) étant incorporé dans le corps de carte (1),
**caractérisé en ce que**
avec le au moins un fil de sécurité (4), plusieurs feuilles (301, 302, 303) parmi la pluralité de feuilles (2, 2', 301, 302, 303) sont cousues ensemble.

9. Corps de carte selon la revendication 8, **caractérisé en ce que** la pluralité de feuilles (2, 2', 301, 302, 303) comprend une pluralité de feuilles noyaux (301, 302, 303) et des feuilles de recouvrement (2, 2') appliqués sur les feuilles noyaux (301, 302, 303), cependant que, avec le au moins un fil de sécurité (4), plusieurs des feuilles noyaux (301, 302, 303) sont cousues ensemble.

10. Corps de carte selon la revendication 8 ou 9, **caractérisé en ce que** les plusieurs feuilles (301, 302, 303) sont cousues ensemble avec un ou plusieurs fils de sécurité (4) distincts à différentes positions dans le corps de carte.

11. Corps de carte selon une des revendications de 8 à 10, **caractérisé en ce que** les plusieurs feuilles (301, 302, 303) sont cousues par l'utilisation de plusieurs fils de sécurité (4).

12. Corps de carte selon une des revendications de 8 à 11, **caractérisé en ce que** les plusieurs feuilles (301, 302, 303) sont cousues avec le au moins un fil de sécurité (4) de manière basée sur un point de chaînette simple et/ou sur un point noué double et/ou sur un point overlock.

13. Corps de carte selon une des revendications précédentes, **caractérisé en ce que** le au moins un fil de sécurité (4) est incorporé de telle façon dans le corps de carte qu'il est visible des deux côtés du corps de carte (1).

14. Support de données portable, en particulier carte à puce, comportant un corps de carte (1) selon une des revendications de 8 à 13.
